# EUROPEAN PATENT APPLICATION

(11) **EP 4 019 473 A1**
(43) Date of publication of application: **29.06.2022**
(21) Application number: 20315505.6
(22) Date of filing: 23.12.2020
(51) Int. Cl.: C02F 1/04, B01D 3/10, C02F 11/12, C02F 103/32

(54) **TREATMENT OF OIL MILL EFFLUENTS (OME)**

(71) Applicant: Afyren, 63000 Clermont-Ferrand (FR)
(72) Inventor: Pessiot, Jérémy, 58400 LA Charite SUR Loire (FR); Roussel, Michael, 63000 Clermont Ferrand (FR); Sordet, Nicolas, 69660 Collonges AU Mont D'OR (FR); Bost, Aurélien, 63000 Clermont Ferrand (FR)
(74) Representative: Be IP

(57) **Abstract**

The present disclosure relates to a method of treatment of oil mill effluents (OME) comprising recovery of water on the one hand and a cake of dry organic residue on the other hand (cake of treated OME), wherein purity of the recovered products allows safe discharge of water in the environment and potentially safe use of the remaining organic products.

## Description

The present disclosure relates to a method of treatment of oil mill effluents (OME) comprising recovery of water on the one hand and a cake of dry organic residue on the other hand (cake of treated OME), wherein purity of the recovered products allows safe discharge of water in the environment and potentially safe use of the remaining organic products.

### BACKGROUND OF THE INVENTION

Edible oil refinery processes generate a substantial amount of waste. Oil mill effluents are slurries comprising large amounts of water with organic and nutrient constituents. Wastewater treatment is essential before reintroducing the water into a natural environment. Directly discharging wastewater without treatment causes irreversible damages to aquatic life.

Many attempts were made to valorize the waste into added value products, such as biogas or organic acids, through various technologies, including biological treatments where the waste is used as a substrate for different processes of fermentation, physiochemical treatments like filtration, coagulation, photocatalysis, adsorption, oxidation, or by thermochemical treatments or a combinations of different treatments (Z.S. Lee, S.Y. Chin, J.W. Lim et al. / Environmental Technology & Innovation 15 (2019) 100377). However, due to the composition of the waste and the lack of efficient methods, there is a need to provide an economically and eco-friendly efficient method to treat the waste, to allow safe discharge of water in the environment and potentially safe use of the remaining organic products.

The present invention provides for a solution economically viable solving the problem of large-scale treatment of oil mill effluents, allowing the production of fresh water.

### SUMMARY OF THE INVENTION

The present disclosure provides for a method of treatment of oil mill effluents comprising a first step of concentration of the OME (concentration step) to obtain a concentrated OME and a second step of drying of the concentrated OME, wherein the step of drying comprises recovery of water on the one hand and a cake of dry organic residue (cake of treated OME) on the other hand.

According to the present disclosure, the water recovered is further applied on a ground in an irrigation process and/or the cake of treated OME (concentrated OME) is further applied on a filed for fertilizing said soil in the field.

The present disclosure also provides for a method for fertilizing a soil in a field for agriculture comprising applying on the said field the cake of treated OME recovered from the method of treatment disclosed herein.

The present disclosure also provides for the use as fertilizer of the cake of treated OME recovered from the method of treatment disclosed herein.

### DETAILLED DISCLOSURE OF THE INVENTION

Oil mill effluents are waste obtained from vegetal oil refinery processes comprising milling of oil-containing parts of plants. In one aspect the OME is waste from refinery processes where the oil-containing parts of plants is selected among coconut, cottonseed, olive, palm, peanut, rapeseed, soybean and sunflower seed. In another aspect, the OME is waste from refinery processes where the vegetal is palm (palm oil mill effluent - POME) or olive (olive mill wastewater - OMW). In another aspect, the OME is POME.

OMEs are generally acidic, and have a viscous composition generally comprising a large fraction water and organic matter and the following table gives general parameters and constituent's composition of POME.

| General composition and parameters of POME | |
|---|---|
| Parameters | I mg/L |
| COD | 10000-100000 |
| SS | 5000-55000 |
| TS | 10000-80000 |
| pH | 3,4-5,2 |
| Total Nitrogen | 180-1400 |
| Phosphorus | ≈180 |
| Potassium | ≈ |
| Calcium | ≈430 |
| Boron | ≈ |
| Magnesium | ≈620 |
| Iron | ≈45,0 |
| Copper | ≈1,0 |
| Manganese | ≈2,0 |
| Zinc | ≈ |

### Concentration step

The concentration step comprises evaporation of water. From a composition comprising more than 90% of water, the evaporation step produces a concentrated OME where the water content is from 70% to 5% of the total composition.

In the concentration step, at least 30% of water is removed from the OME, particularly at least 50%.

Methods of concentration by water evaporation are known in the art. One simple way is to leave the OME in ponds and wait for the natural evaporation process. This however space and time consuming not suitable for an industrial waste treatment and it release CO₂ and methane in the environment

According to one aspect of the invention, concentration is made with an evaporator. Evaporators are known in the art. Many different evaporators appropriate to concentrate slurries can be used.
The concentration may be performed at atmospheric pressure or under vacuum, and vacuum could be preferred in order to limit and minimize burn of matter and energy consumption (see also Mechanical vapor compression). Minimizing the burn of matter through low temperature process will reduce energy consumption, avoid creation of new impurities that could be created and will also allow to keep as much as possible the organic matter in order to allow and optimize its fertilizing characteristics.

Temperature should then be adapted at the water ebullition temperature corresponding to applied pressure. (for example 70°c in average for 300 mbars abs).

In one aspect of the invention, the concentrator is operating at low/ambient temperature.

Evaporators, and particularly evaporators operating at low/ambient temperature are plate type evaporators, falling film evaporators (GEA Wiegand, Buss-SMS-Canzlez), forced circulation evaporator (Gea Wiegand, Swenson Technologies, France Evaporation) or flash evaporators (GEA Wiegand, Labbe Process), coupled preferentially with multiple effect technology, and also with Mechanical Vapor Recompression. Reverse osmosis technologies are also suitable for this application.

### Drying Step

Drying of the concentrated OME comprises water evaporation, wherein evaporated water is condensed for the recovery of purified water.

The recovered water comprises less than 2000ppm of impurities and thus can be released in nature or reintroduced in general water systems. In another aspect, the recovered water comprises less than 1000 ppm of impurities, including less than 100 ppm of impurities, even less than 20 ppm of impurities.

As a further aspect of the present disclosure, the water recovered with such level of impurities may be discharged in the environment. Particularly the recovered water can be used in an irrigation process.

According to one embodiment of the present disclosure, the recovered water is further applied on a ground in an irrigation process. It may be applied in fields for agriculture, but also at the foot of trees, particularly fruit trees or ornamental trees, and in floriculture.

The person skilled in the art will identify the best conditions to allow drying without excess heat that would damage the organic material, develop new impurities that would potentially evaporate with the vapor and pollute the water recovered.

In one aspect of the invention, drying is performed at a temperature below about 80 °C, particularly below 75°C. In a particular embodiment, drying is performed at a temperature from about 50°C to about 70°C (also designated as low temperature).

The temperature below about 80°C or less defined above is advantageously combined with reduced pressure (also designated as under vacuum). Particularly a pressure below 70 kPa (700 mbar), more particularly below 60 kPa (600 mbar), even more particularly from about 10 kPa (100 mbar) to 50 kPa (mbar) are adequate for drying at a low temperature below about 80°C defined above.

Particularly the drying is performed at a temperature from about 50 °C to about 70°Ca and a reduced pressure form about 10 kPa to 50 kPa.

In one aspect, the drying is performed as "indirect drying" where the dryer is arranged to avoid a direct contact between the drying air and the material to be dried. Industrial dryers particularly for indirect drying are known in the art, particularly pallet dryers (Buss-Rovactor, GMF, List), Disc dryers (Atlas, KHD, Kvaerner, Hosokawa), rotation drum (Andritz, Comessa), thin film dryer (Buss DAS, GEA Canzler), friction dryder (Fjell TMD)

After drying of the concentrated slurry and recovery of water, a solid cake of organic materials is recovered.

The cake of treated OME recovered can be used for example as fertilizer, as material for construction, as solid for incineration etc.

The invention also concerns a method for fertilizing a soil in a field for agriculture comprising applying on the said field the cake of treated OME recovered from the method described above.

The invention also concerns the use as fertilizer of the cake of treated OME recovered from the method described above.

### OME Treatment Installation

The OME treatment installation will advantageously built near the oil mill to avoid long distance transport of the waste.

In one aspect, the OME treatment will be sized to occupy the smallest area of land as possible. The OME treatment could be constructed as one plant or in a succession of skid packages.

For the treatment of industrial waste, the skilled person will determine the appropriate size of evaporators and dryers to be installed in an OME treatment installation. The OME treatment installation may comprise one or more evaporators and one or more dryers.

When the OME treatment installation comprises more than one evaporator, the evaporators may be connected in sequence or in parallel.

## Claims

1. A method of treatment of oil mill effluents (OME) comprising a first step of concentration of the OME (concentration step) to obtain a concentrated OME and a second step of drying of the concentrated OME, wherein the step of drying comprises recovery of water on the one hand and a cake of dry organic residue on the other hand (cake of treated OME).

2. The method of claim 1, wherein the OME are waste obtained from vegetal oil refinery processes comprising milling of oil-containing parts of plants selected from the group consisting of coconut, cottonseed, olive, palm, peanut, rapeseed, soybean and sunflower seed.

3. The method of claim 1, wherein the OME palm oil mill effluent (POME) or olive mill wastewater (OMW).

4. The method of claim 1, wherein the OME is palm oil mill effluent (POME).

5. The method of one of claims 1 to 4, wherein the concentration step comprises removal of at least 30% of water from the OME.

6. The method of claim 5, wherein the concentration step comprises removal of at least 50% of water from the OME.

7. The method of one of claims 1 to 6, concentration is made with an evaporator.

8. The method of one of claims 1 to 7, wherein concentration is done at low/ambient temperature or low pressure.

9. The method of one of claims 1 to 8, wherein drying of the concentrated OME comprises water evaporation and condensation of the vapor for the recovery of purified water.

10. The method of one of claims 1 to 10, wherein drying is done indirectly, under vacuum and/or low temperature

11. The method of one of claims 1 to 10, wherein drying is performed in a disc dryer or friction dryer.

12. The method of one of claims 1 to 11, wherein the water recovered is further applied on a ground in an irrigation process.

13. The method of one of claims 1 to 12, wherein the cake of treated OME is further applied on a filed for fertilizing said soil in the field.

14. A method for fertilizing a soil in a field for agriculture comprising applying on the said field the cake of treated OME recovered from the method of one of claims 1 to 11.

15. Use as fertilizer of the cake of treated OME recovered from the method of one of claims 1 to 11.
